# FASCICULE DE BREVET EUROPEEN

(11) **EP 1 985 906 B1**
(45) Date de publication et mention de la délivrance du brevet: **20.01.2010**
(21) Numéro de dépôt: 08103132.0
(22) Date de dépôt: 28.03.2008
(51) Int. Cl.: F16L 37/12, F16L 37/62

(54) **Adaptateur de test ou de remplissage de recipient ou circuit de fluide avec un goulot**
Testadapter oder Adapter zum Füllen eines mit einem Stutzen versehenen Behälters oder Flüssigkeitskreislaufs
Adapter for testing or filling a fluid container or circuit with a neck

(30) Priorité: 24.04.2007 FR 0702957
(43) Date de publication de la demande: 29.10.2008
(73) Titulaire: Cinetic Filling, 44344 Bouguenais Cedex (FR)
(72) Inventeur: Martin, Denis, 44340, Bouguenais (FR); Goasguen, Jacques, 44400, Reze (FR); Gourmaud, Claude, 44200, Nantes (FR); Bassin, Dominique, 44000, Nantes (FR)
(74) Mandataire: Cabinet Plasseraud

(56) Documents cités:
- WO-A-2006/072242
- US-A- 5 649 723
- US-A- 6 073 974

## Description

La présente invention porte sur un adaptateur de test ou de remplissage de récipient ou circuit de fluide avec un goulot.

Le domaine technique de l'invention porte plus particulièrement sur les adaptateurs propres à se raccorder de manière étanche à un récipient ou circuit de fluide au niveau d'un goulot fileté pour ainsi en tester l'étanchéité ou le remplir par le biais de cet adaptateur.

De manière plus précise, la présente invention porte sur un adaptateur de test ou de remplissage de récipient ou circuit de fluide avec un goulot, en particulier pour véhicule automobile, apte à établir un raccordement étanche avec ledit goulot, et comprenant un corps composé d'un manchon formant poignée de préhension relié à une armoire de test par une gaine de liaison et des connexions électriques et pneumatiques ; un logement cylindrique relié au corps et formant tête de fixation étanche sur le goulot ; une pluralité de griffes de serrage disposées concentriquement autour d'un axe longitudinal du logement ; ainsi que des moyens aptes à exercer une pression sur la pluralité de griffes de serrage pour les coupler ou désaccoupler du goulot.

De tels adaptateurs de test ou de remplissage, également dénommés pistolets de remplissage ou de test à visser pour des réservoirs à liquides, sont couramment utilisés dans des installations de test ou de remplissage automatique ou semi-automatique principalement destinées à l'industrie automobile, en particulier pour les réservoirs et circuits à carburant, les circuits de refroidissement de moteurs de véhicules automobiles, les circuits et réservoirs de liquide de freinage, ainsi éventuellement que les circuits de lubrification ou de liquide de lavage, notamment de pare-brise ou de vitre arrière pour des véhicules automobiles.

Ces installations permettent notamment, sur une ligne de montage de véhicules automobiles, de vérifier l'absence de fuites au niveau de circuits tels que ceux mentionnés ci-dessus, et de remplir de manière automatique ou semi-automatique les différents circuits et réservoirs de ces véhicules en huile de lubrification, liquide réfrigérant, carburant, huile hydraulique de freinage, etc.

Dans ces installations, l'adaptateur est l'équipement situé à une extrémité d'un tuyau flexible de test ou de remplissage, et qui vient se fixer temporairement sur l'extrémité du circuit ou le goulot du récipient que l'on souhaite tester ou remplir, et, à cet effet, l'adaptateur comporte généralement également au moins un organe de commande, le plus souvent des boutons de commande, permettant de piloter le fonctionnement de l'installation.

Par le document EP 1 538 125, on connait un tel adaptateur, dénommé embout de remplissage à tête de vissage pour bidons ou circuits de fluide pour permettre un vissage utilisant le filetage extérieur normal déjà présent autour du goulot d'un récipient d'un tel circuit, pour la fermeture du récipient et/ou du circuit par le vissage d'un bouchon sur le goulot. L'embout de remplissage comporte un corps composé d'un manchon-poignée de préhension relié à une armoire de test par une gaine de liaison et des connexions électriques et pneumatiques, et une tête de centrage, équipée d'une interface entre l'embout de remplissage et un goulot du bidon ou du circuit à remplir ou tester, l'interface comportant une tête de vissage, et l'embout de remplissage comportant des moyens de vissage entrainant en rotation un corps de la tête vissable sur ledit goulot.

Il est également connu de l'art antérieur de réaliser des raccords à enfoncer sur un goulot pour établir un raccordement dont l'étanchéité est assurée par pression à un appareil muni de moyens de raccordement. Un tel raccord est ainsi décrit dans le document EP 0 202 592, où le raccord comporte un logement cylindrique ; un piston pouvant se déplacer dans ledit logement ; plusieurs griffes de serrage disposées concentriquement autour d'un axe longitudinal du logement et placées sur la partie avant du piston à partir duquel elles s'étendent ; les extrémités libres des griffes de serrage étant mobiles radialement via un aménagement de rampes lorsque le piston se meut longitudinalement vers l'extérieur par rapport au logement ; et des moyens d'exercer une pression sur le piston pour amener les griffes de serrage en position d'accouplement de raccordement ou de désaccouplement. Les griffes de serrage sont reliées à une extrémité avant du piston de manière à établir une liaison essentiellement étanche, mais pouvant être relâchée, par un système de crochets entre les extrémités arrière des griffes de serrage et l'extrémité avant dudit piston, les extrémités arrière des griffes de serrage étant segmentées et munies de projections radiales emboîtées dans une cavité annulaire prévue à l'extrémité avant du piston.

Toutefois, le raccord selon le document EP 0 202 592 est relativement complexe à mettre en oeuvre et n'a pas pour objet un adaptateur de test ou de remplissage de récipient ou circuit de fluide avec un goulot à filetage externe.

Un raccord permettant de réaliser un branchement étanche à la pression sur un dispositif pourvu de moyens de branchement est également décrit dans le document EP 0 382 723 et présente les mêmes inconvénients précédemment mentionnés.

Par ailleurs, il est également connu selon l'art antérieur de réaliser des adaptateurs pouvant se fixer à l'aide de griffes sur une collerette extérieure prévue sur le goulot. Toutefois, il n'est parfois pas possible, pour des contraintes de fabrication, de rajouter une telle collerette sur un goulot. US-A-6,073,974 divulgue un adaptateur selon le préambule de la revendication 3.
Il serait donc particulièrement intéressant de réaliser un adaptateur permettant d'assurer une liaison parfaitement étanche sur le filetage, préférentiellement externe, d'un goulot fileté, pouvant se connecter et se déconnecter plus rapidement par rapport aux adaptateurs connus et pouvant se raccorder sur un goulot sans collerette.

Selon un premier de ses aspects, la présente invention porte sur un adaptateur du type connu par US-A-6,073,974, et qui se caractérise selon la partie caractérisante de la revendication 3.

Selon un mode réalisation avantageux, le poussoir comprend une partie tubulaire axiale entourant une partie tubulaire axiale du porte-joint ainsi qu'une partie circulaire transversale avec une extrémité libre formant les moyens de poussée transversale contre la surface interne des griffes de serrage.

Avantageusement, l'extrémité libre de la partie circulaire transversale du poussoir se présente sous la forme d'une bague cylindrique sur laquelle est en butée la surface interne des griffes de serrage.

Afin de permettre la solidarisation étanche des griffes de serrage sur le goulot, chaque griffe de serrage présente un filetage partiel de forme sensiblement complémentaire au filetage du goulot.

Afin de réduire le volume global de l'adaptateur selon l'invention, un logement pour le coulissement axial du piston inférieur est formé dans le porte griffes.

Afin de faciliter le coulissement sans frottement de la bague extérieure sur la surface externe des griffes de serrage, chaque griffe de serrage présente une rampe sur sa surface externe pour le guidage du rebord inférieur de la bague extérieure coulissante.

Selon une forme de réalisation alternative de l'adaptateur, la bague extérieure coulissante est reliée, par des moyens de fixation, à un piston intermédiaire coulissant autour du conduit axial entre le piston supérieur et le piston inférieur.

De manière avantageuse, les moyens de fixation de la bague extérieure sur le piston intermédiaire se présentent sous la forme d'au moins une vis filetée dans au moins un taraudage correspondant prévu dans la tête du piston intermédiaire.

Avantageusement, le piston intermédiaire est apte à coulisser axialement sur la tige du piston supérieur.

Avantageusement, le piston intermédiaire est apte à coulisser dans une bague fixe sur laquelle est accroché le porte griffes.

De manière avantageuse, la tige du piston supérieur est apte à exercer une force de poussée axiale sur la face supérieure du porte-joint de sorte à permettre la formation d'une liaison étanche entre le joint et le rebord du goulot par écrasement du joint sur le rebord du goulot.

Selon un autre de ses aspects, la présente invention a également pour objet un procédé de test ou de remplissage d'un récipient ou circuit de fluide avec un goulot, le procédé étant du type connu par US-A-6,073,974 précité et selon le préambule de la revendication 1, et se caractérise selon la partie caractérisante de la revendication 1.

De manière supplémentaire, le procédé peut comprendre une étape de commande, par l'intermédiaire d'un piston prévu dans l'adaptateur, du coulissement axial de la bague extérieure.

La présente invention est maintenant décrite à l'aide d'exemples uniquement illustratifs et nullement limitatifs de la portée de la présente invention, et à partir des illustrations ci-jointes, dans lesquelles :
- la figure 1 est une vue latérale d'un adaptateur de remplissage d'un circuit ;
- la figure 2 est une vue frontale de l'adaptateur de la figure 1 ;
- la figure 3 est une première vue en coupe transversale du logement formant tête de fixation étanche sur un goulot fileté d'un adaptateur selon une première forme de réalisation de l'invention ;
- la figure 4 est une seconde vue en coupe transversale selon un autre plan de coupe du logement de la figure 3 ;
- la figure 5 est une troisième vue en coupe transversale selon encore un autre plan de coupe du logement de la figure 3 ;
- les figures 6 à 9 représentent respectivement une vue partielle en coupe transversale de la tête de fixation étanche de l'adaptateur selon une première forme de réalisation de l'invention, lors des différentes étapes du procédé mis en oeuvre pour son accrochage étanche sur un goulot fileté ;
- la figure 10 est une vue en coupe transversale partielle d'une forme de réalisation alternative de l'adaptateur selon l'invention.

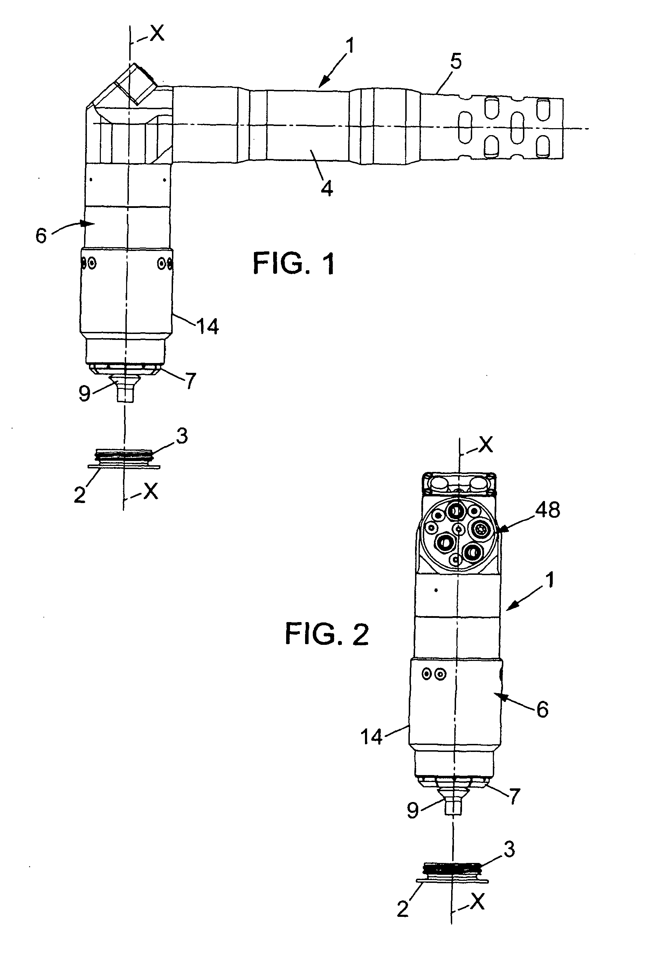

Il est représenté sur la figure 1 une vue latérale d'un adaptateur 1 selon l'invention, par exemple un adaptateur de remplissage d'un circuit de freinage de véhicule automobile, ce circuit ayant notamment un réservoir de liquide de freinage muni d'un goulot 2, préférentiellement avec un filetage externe 3, sur lequel est normalement vissé un bouchon de fermeture étanche du circuit.

Bien que dans le mode de réalisation préférentiel, l'adaptateur 1 est décrit comment pouvant s'adapter sur un goulot 2 présentant un filetage externe 3, il doit être compris que le présent adaptateur 1 peut s'appliquer également pour un goulot 2 avec un filetage interne ainsi que pour toute forme possible du goulot 2. Dans tous les cas, le principe de fonctionnement de l'adaptateur selon l'invention reste le même.

L'adaptateur 1 de test ou de remplissage de récipient ou circuit de fluide avec un goulot 2, en particulier pour véhicule automobile, est apte à établir un raccordement étanche avec ledit goulot 2.

L'adaptateur 1 comprend un corps 4 composé d'un manchon 5 formant poignée de préhension relié à une armoire de test par une gaine de liaison et des connexions électriques et pneumatiques (non représentés sur les figures, mais de type connu en soi).

Un logement 6, en général cylindrique, est relié au corps 4 et forme tête de fixation étanche sur le goulot 2.

De sorte à permettre la solidarisation étanche de la tête de fixation sur le goulot 2, une pluralité de griffes de serrage 7 est disposée, préférentiellement concentriquement, autour de l'axe longitudinal X-X du logement 6. Préférentiellement, les griffes de serrage 7 sont aptes à se solidariser sur un filetage externe 3 du goulot 2.

L'adaptateur 1 présente des moyens aptes à exercer une pression sur la pluralité de griffes de serrage 7 pour les coupler ou désaccoupler du goulot 2, ces moyens étant décrits plus précisément ultérieurement.

De manière préférentielle, les griffes de serrage 7 sont prévues pour s'adapter sur le filetage externe 3 d'un goulot 2. Toutefois, il est également possible de prévoir un adaptateur 1 selon l'invention et fonctionnant selon le même principe dont les griffes de serrage 7 sont aptes à se s'accoupler avec un filetage interne d'un goulot 2.

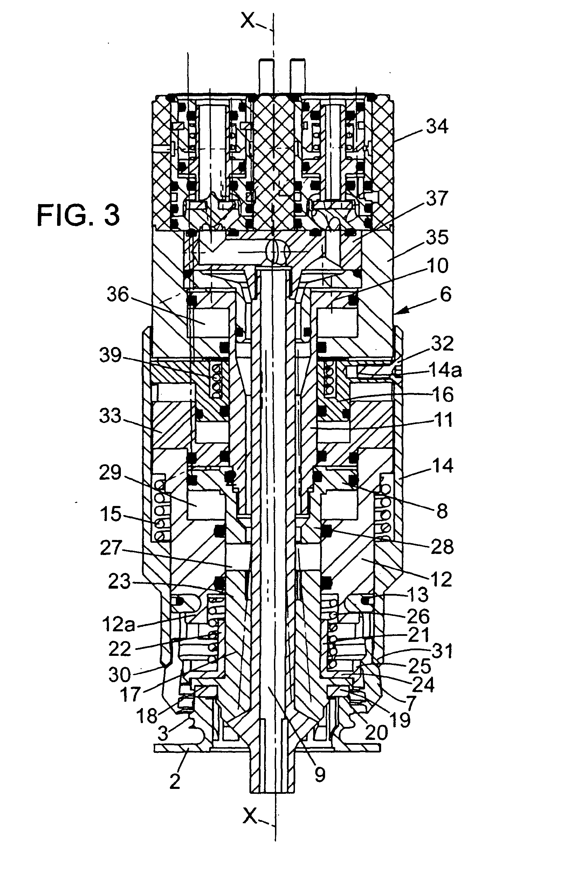

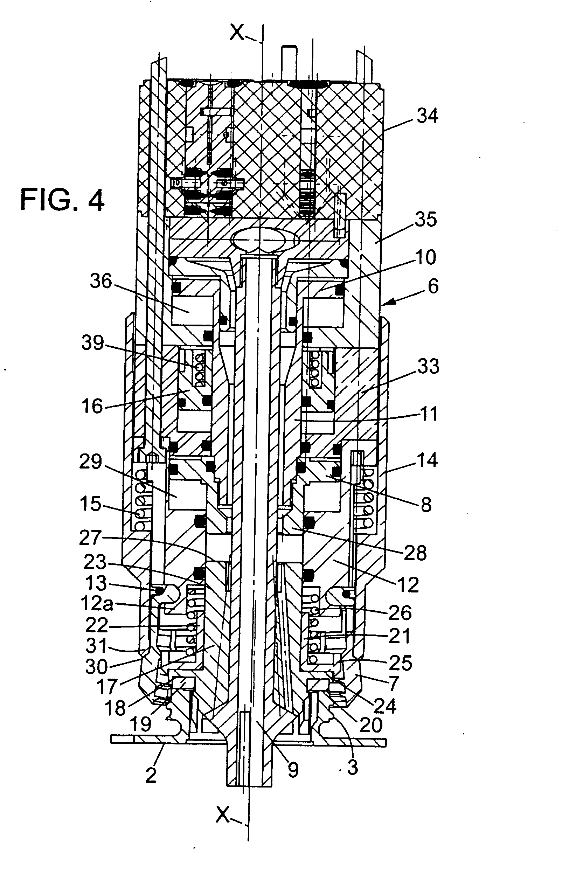

Comme cela apparait plus clairement selon les trois vues en coupe transversale du logement 6 représenté dans les figures 3 à 5, l'adaptateur 1 selon l'invention comprend un piston inférieur 8 apte à coulisser dans le logement 6 autour d'un conduit axial d'alimentation de fluide 9, et couramment dénommé tube plongeur, celui-ci étant destiné à être engagé et inséré à travers le goulot 2.

Il est également prévu un piston supérieur 10 apte à coulisser autour du conduit axial 9 et comprenant une tige 11 apte à venir en butée contre le piston inférieur 8.

Le logement 6 comprend un porte griffes 12 sur lequel est fixée la pluralité des griffes de serrage 7 respectivement par une liaison pivot, ce grâce à quoi les griffes de serrage 7 sont aptes à être couplées/désaccouplées du goulot 2 par pivotement.

Plus précisément, les griffes de serrage 7 sont maintenues sur le porte griffes 12 par l'intermédiaire d'un joint torique 13 entourant l'extrémité supérieure de chaque griffe 7 pour que celle-ci soit maintenue sur le porte griffes 12 et formant l'axe pivot par rapport auquel chaque griffe 7 est apte à pivoter.

Dans la suite de la description, les termes « inférieur » et « supérieur » sont utilisés uniquement en référence au sens de représentation de l'adaptateur sur les figures, et ne doit pas être compris comme limitant la portée de la présente invention.

En effet, l'extrémité inférieure 12a du porte griffes 12 se présente sous la forme d'une gorge dans laquelle est apte à se loger l'extrémité supérieure de chaque griffe 7, le joint torique 13 encerclant et maintenant l'extrémité supérieure de la griffe 7 dans la gorge 12a du porte griffes 12.

Afin de permettre le serrage des griffes 7 sur le filetage extérieur 3 du goulot 2 (dans le cas où l'adaptateur est prévu pour se solidariser sur un filetage extérieur 3 d'un goulot 2), il est prévu une bague extérieure 14 axialement coulissante autour du porte griffes 12, et préférentiellement à l'encontre de premiers moyens ressort 15, prenant appui d'une part sur la bague extérieure 14 (au niveau de sa surface interne) et, d'autre part, sur le porte griffes 12, la bague extérieure 14 étant apte à contraindre transversalement la pluralité de griffes de serrage 7 de manière à accoupler par serrage la pluralité de griffes 7 sur le goulot 2.

La bague extérieure 14 permet donc d'entraîner et de contraindre le pivotement des griffes de serrage 7 en direction de l'axe longitudinal X-X du logement 6.

Selon une première forme de réalisation de l'invention telle qu'illustrée sur les figures 2 à 9, la bague extérieure 14 coulissante est reliée, par des moyens de fixation 14a, et tels que représentés plus précisément selon la vue en coupe transversale de la figure 3, à un piston intermédiaire 16 coulissant autour du conduit axial 9 entre le piston supérieur 10 et le piston inférieur 8. Ainsi, le coulissement axial du piston intermédiaire 16 entraîne également le coulissement axial de la bague extérieure 14.

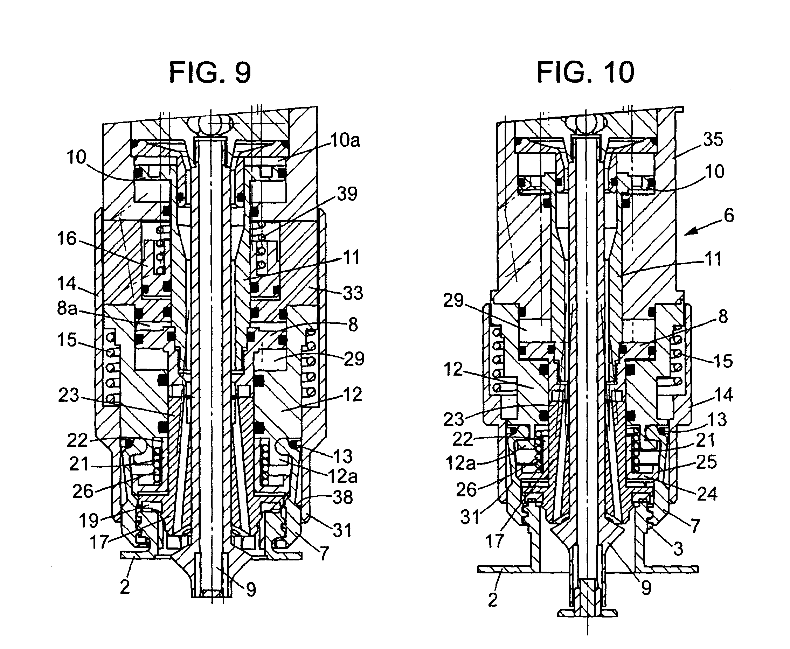

Selon une seconde forme de réalisation de l'invention et telle que représentée sur la figure 10, il est également possible de prévoir que la bague extérieure 14 soit uniquement manuellement axialement coulissante et ne soit donc pas reliée à un piston intermédiaire 16. Toutefois, il convient de noter que le principe général de fonctionnement de l'adaptateur reste le même dans les deux modes de réalisation.

Un porte-joint 17 est prévu coulissant autour du conduit axial 9, plus précisément au niveau de l'extrémité inférieure du conduit 9, et présente une face inférieure 18 portant un joint annulaire 19 apte à prendre appui contre le rebord 20 du goulot 2.

Un poussoir 21 est prévu coulissant sur le porte-joint 17 et présente des moyens de poussée transversale aptes à exercer une poussée transversale sur la surface interne (surface dirigée vers l'axe longitudinal X-X) de la pluralité de griffes de serrage 7 de sorte que la contraction des premiers moyens ressort 15 par remontée axiale de la bague extérieure 14 dont le rebord inférieur est en appui sur la surface externe des griffes de serrage 7 permet l'écartement transversal par pivotement des griffes de serrage 7 du goulot 2.

Plus précisément, le poussoir 21 comprend une partie tubulaire axiale 22 entourant une partie tubulaire axiale 23 du porte-joint 17 ainsi qu'une partie circulaire transversale 24 avec une extrémité libre 25 formant les moyens de poussée transversale contre la surface interne des griffes de serrage 7 et se présentant avantageusement sous la forme d'une bague cylindrique sur laquelle est en butée la surface interne des griffes de serrage 7.

Des seconds moyens ressort 26 sont également prévus entre le porte griffe 12 et le poussoir 21 de manière à exercer une force de poussée axiale descendante sur le poussoir 21, de sorte que les moyens de poussée transversale du poussoir 21 entraînent l'écartement par pivotement des griffes de serrage 7, quand l'adaptateur 1 n'est pas mis en contact sur le goulot 2 et que la bague extérieure coulissante 14 est dans sa position haute.

Lorsque l'adaptateur 1 est présenté sur le goulot 2, l'extrémité inférieure libre du conduit axial 9 est engagée dans le goulot 2, le porte-joint 17 pouvant coulisser par éloignement et remontée de l'extrémité libre du conduit axial 9 à l'encontre des seconds moyens ressort 26.

Ainsi, les seconds moyens ressort 26 sont ainsi agencés de telle manière que l'application d'une force de poussée axiale sur le porte-joint 17 entraîne la contraction des seconds moyens ressort 26, la remontée du porte-joint 17, la disparition des forces de poussée transversale exercées par les moyens de poussée transversale du poussoir 21 du fait du rapprochement du poussoir 21 vers le porte griffes 12, la détente des premiers moyens ressort 15, le coulissement axial du rebord inférieur de la bague extérieure 14 sur la surface externe des griffes de serrage 7 et le pivotement des griffes de serrage 7 dans leur position d'accouplage sur le goulot 2.

Par ailleurs, le porte-joint 17 présente une extrémité supérieure 27 apte à venir en butée contre l'extrémité de la tige 28 du piston inférieur 8.

Afin de permettre la solidarisation des griffes 7 sur le filetage 3 du goulot 2 et dans le cas où l'adaptateur est prévu comme pouvant se raccorder sur un filetage externe 3 d'un goulot 2, chaque griffe de serrage 7 présente un filetage partiel interne de forme sensiblement complémentaire au filetage externe 3 du goulot 2. En fait, de manière générale, chaque griffe de serrage 7 présente un filetage partiel de forme sensiblement complémentaire au filetage 3 du goulot 2.

Préférentiellement, un logement 29 pour le coulissement axial du piston inférieur 8 est formé dans le porte griffes 12.

Chaque griffe de serrage 7 présente une rampe 30 sur sa surface externe pour le guidage du rebord inférieur 31 de la bague extérieure coulissante 14, de sorte à faciliter le coulissement et le glissement sans frottement de la bague extérieure 14 sur la surface externe des griffes de serrage 7.

Selon le premier mode de réalisation de l'adaptateur et tel qu'illustré aux figures 3 à 9, les moyens de fixation 14a de la bague extérieure 14 sur le piston intermédiaire 16 se présentent sous la forme d'au moins une vis 32 (voir figure 3), et préférentiellement de trois vis 32, filetée dans au moins un taraudage correspondant prévu dans la tête du piston intermédiaire 16, le piston intermédiaire 16 étant apte à coulisser axialement sur la tige 11 du piston supérieur 10.

Plus précisément, le piston intermédiaire 16 est apte à coulisser dans une bague fixe 33 prévue dans le logement 6 et sur laquelle est accroché le porte griffes 12.

La tige 28 du piston inférieur 8 est apte à exercer une force de poussée axiale sur la face supérieure du porte-joint 17 de sorte à permettre la formation d'une liaison étanche entre le joint 19 et le rebord du goulot 2 par écrasement du joint 19 sur le rebord du goulot 2.

Afin de permettre le passage de fluide dans le conduit axial 9, il est prévu un ensemble à vannes de distribution 34 sur lequel est fixé une jupe supérieure 35 dans laquelle est formée le logement 36 pour la course du piston supérieur 10, un répartiteur de lignes 37 étant prévu connecté au conduit axial 9 et également formé dans la jupe supérieure 35.

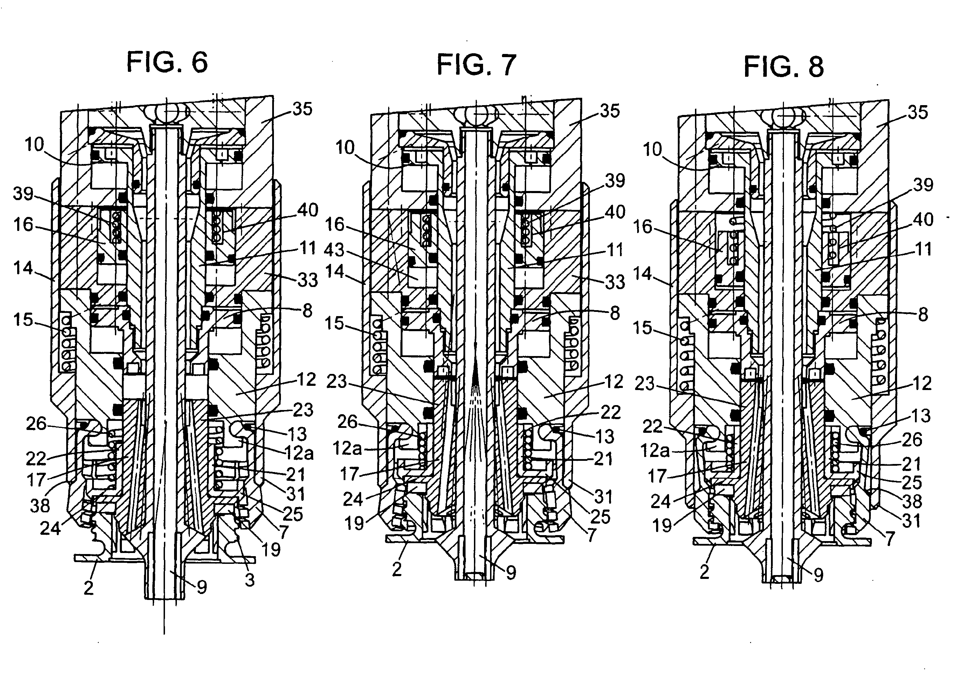

Les figures 6 à 9 illustrent les différentes étapes de la solidarisation étanche de la première forme de réalisation de l'adaptateur sur un goulot 2.

De manière préférentielle, il est dans un premier temps procédé à la remontée axiale de la bague extérieure coulissante 14 afin de permettre l'écartement par pivotement des griffes de serrage 7 et donc leur solidarisation sur le goulot 2.

Ensuite, et comme cela apparait de la figure 6, il est procédé à l'insertion du conduit axial 9, et plus précisément de son extrémité libre à travers le goulot 2. On vient alors mettre en contact le joint d'étanchéité 19 du porte-joint 17 contre le rebord 20 du goulot fileté 2.

Dans cet état non actif de l'adaptateur 1, les seconds moyens ressort 26 sont détendus et exercent une force de poussée sur le porte-joint 17, les moyens de poussée transversale du poussoir 21 étant alors en appui contre la surface interne des griffes de serrage 7, ce qui maintient leur position éloignée de l'axe longitudinal X-X du logement 6.

De plus, les premiers moyens ressort 15 sont dans un état contracté avec le rebord inférieur 31 libre de la bague extérieure coulissante 14 en appui sur la surface externe des griffes de serrage 7, la force exercée par les moyens de poussée transversale du poussoir 21 étant préférentiellement supérieure à la force axiale descendante exercée par les premiers moyens ressort 15 sur la bague extérieure 14.

Afin de faciliter la contraction des premiers moyens ressort 15 et le maintien du rebord inférieur 31 de la bague extérieur 14 sur la surface externe des griffes de serrage 7, il est prévu un décrochement 38 (voir par exemple la figure 8) sur lequel est apte à venir s'appuyer de manière complémentaire le rebord inférieur 31 de la bague extérieure 14.

Toujours dans cet état non actif de l'adaptateur 1, le piston inférieur 8 et le piston supérieur 10 ainsi que le piston intermédiaire 16 (quand un tel piston intermédiaire 16 est prévu) sont dans leur position haute, c'est-à-dire dans une position distale par rapport au goulot 2 ou aux griffes de serrage 7.

Il peut être également remarqué sur la figure 6 que le piston intermédiaire 16 comporte un logement cylindrique intérieur 40 dans lequel sont logés des troisièmes moyens ressort 39.

Les troisièmes moyens ressort 39 sont réalisés de manière telle qu'ils se trouvent dans un état contracté quand la bague extérieure 14 est dans une position haute avec son rebord inférieur 31 en appui dans le décrochement 38 de la surface externe des griffes de serrage 7, et qu'ils sont dans un état détendu quand la bague extérieure 14 a coulissé sur la surface externe des griffes de serrage 7 et entraîne le maintien et la coopération de la surface interne filetée des griffes de serrage 7 sur le filetage 3 du goulot 2.

Les troisièmes moyens ressort 39 prennent appui d'un côté sur le piston intermédiaire 16, et plus précisément dans le logement cylindrique 40 formé dans le piston intermédiaire 16 et, de l'autre côté sur la jupe supérieure 35 fixe dans laquelle est formé le logement pour le coulissement du piston supérieur 10.

Lors d'une seconde étape lors de la solidarisation de l'adaptateur 1 sur le goulot 2, et comme cela est illustré sur la figure 7, l'utilisateur, tenant l'adaptateur 1 par son manchon 5 formant poignée, exerce une force de poussée sur le porte-joint 17, ce qui entraîne la contraction des seconds moyens ressort 26.

La remontée axiale du porte-joint 17 en direction du porte griffes 12 entraîne la remontée axiale du poussoir 21 dont l'extrémité libre de la partie circulaire transversale 25 ne se trouve alors plus en butée contre la surface interne des griffes de serrage 7.

L'extrémité supérieure du porte-joint 17 se rapproche de la tige du piston inférieur 6, celui-ci étant toujours dans sa position haute.

Lors d'une troisième étape, et comme illustré sur la figure 8, il est procédé au coulissement axial descendant de la bague extérieure 14.

Selon la première forme de réalisation de l'adaptateur 1 quand un piston intermédiaire 16 est prévu, le coulissement de la bague extérieure 14 est commandé par l'intermédiaire du coulissement du piston intermédiaire 16, le piston intermédiaire 16 étant relié à la bague extérieure 14 par les moyens de fixation 14a.

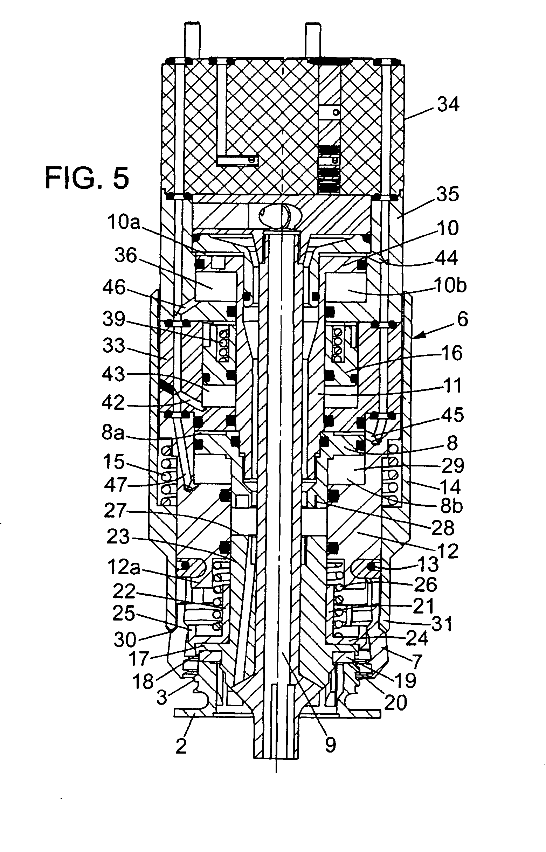

Pour permettre le coulissement du piston intermédiaire 16, celui-ci étant en position haute, il est procédé à l'ouverture de l'orifice d'injection 42 de fluide de soufflage dans la chambre inférieure 43 prévue dans la bague fixe 33 (voir figure 5).

Le piston intermédiaire 16 peut alors coulisser du fait de la force exercée par les troisièmes moyens ressort 39, ainsi que par les premiers moyens ressorts 15 qui peuvent alors se détendre.

De manière alternative, et comme cela est représenté sur la figure 10 d'une seconde forme de réalisation possible d'un adaptateur selon l'invention, la bague extérieure 14 est apte à être coulissée uniquement par l'application d'une force manuelle en plus de la force axiale de poussée exercée par les premiers moyens ressort 15. II est bien entendu qu'il est possible de prévoir les caractéristiques des premiers moyens ressort 15 avec une force de poussée telle qu'ils suffisent en eux même à faire coulisser la bague extérieure 14, une fois que le poussoir n'exerce plus de poussée transversale sur la surface interne des griffes de serrage 7.

Afin de former une liaison étanche du joint 19 sur le porte-joint 17, et comme cela est représenté sur les figures 5 et 9, il est procédé à l'injection de fluide de soufflage dans la chambre supérieure 10a du piston supérieur 10 et dans la chambre supérieure 8a du piston inférieur 8 par l'intermédiaire d'orifices 44, 45 débouchant respectivement dans ces deux chambres supérieures 8a, 10a.

Le piston inférieur 8 et le piston supérieur 10 coulissent alors en se rapprochant du goulot 2.

La tige du piston inférieur 8 vient alors en butée contre l'extrémité supérieure du porte-joint 17 tandis que la tige du piston supérieur 10 est en appui et en butée dans le piston inférieur 8, ce qui entraîne l'écrasement du joint 19 sur le rebord du goulot 2 et donc la formation d'une liaison étanche.

II peut ensuite être procédé au test de remplissage et d'alimentation de fluide du circuit, notamment par l'intermédiaire du conduit axial ou tube plongeur 9.

Par ailleurs, et comme cela apparait plus clairement à la figure 5, du fluide de soufflage est également apte à être injecté et évacué des chambres inférieures 8b, 10b du piston inférieur 8 et du piston supérieur 10, l'injection de fluide de soufflage pouvant se faire par l'intermédiaire d'un orifice supérieur 46 débouchant dans la chambre inférieure 10b du piston supérieur 10 tandis que l'injection de fluide de soufflage peut se faire également par l'intermédiaire d'un orifice supérieur 47 débouchant dans la chambre inférieure 8b du piston inférieur 8.

Le principe de fonctionnement de l'adaptateur 1 reste le même pour le second mode de réalisation de l'adaptateur illustré à la figure 10, à l'exception du fait que la bague extérieur 14 n'est pas prévu coulissante en solidarisation d'un piston intermédiaire 16.

Par ailleurs, il convient de noter que la commande des différents pistons 8, 10, 16 est réalisée par l'intermédiaire de moyens de commande 48 (voir figure 2) sous la forme de boutons de commandes, prévus sur la face frontale de l'adaptateur 1 au niveau de la jonction entre le corps 4 formant poignée et la tête de fixation 6.

Par la suite, afin de désolidariser l'adaptateur 1 du goulot 2, il est procédé à la remontée des pistons 8, 10, 16 dans leur position distale par injection de fluide dans leur chambre inférieure 8b, 43, 10b par l'intermédiaire des orifices d'injection 42, 46, 47, ce qui entraîne la remontée de la bague coulissante 14 et la descente du porte-joint 17 jusqu'à ce qu'il vienne en butée contre l'extrémité libre du conduit axial 9, provoquant par la même, l'application d'une force de poussée transversale par le poussoir 17 sur la surface interne des griffes de serrage 7, et donc le pivotement des griffes de serrage 7 et leur désolidarisation du goulot 2.

Par ailleurs, et tel que cela a été précédemment mentionné, l'adaptateur selon l'invention, bien qu'illustré comme se raccordant sur un goulot présentant un filetage externe, peut également se raccorder sur un filetage interne ou toute forme de goulot. Dans ce cas d'un filetage interne, les griffes de serrage sont alors prévues comme s'insérant et s'accouplant sur le filetage interne d'un goulot et tel que cela est par exemple décrit et illustré dans le document DE 202 05 904.

L'adaptateur selon l'invention permet donc de s'accrocher automatiquement par des griffes de serrage sur le filetage, préférentiellement extérieur, d'un goulot, par un geste simple, rapide et naturel, en posant simplement l'adaptateur sur le goulot, une assistance pneumatique assurant la formation d'une étanchéité nécessaire entre le goulot et l'adaptateur. De manière supplémentaire, une autre assistance pneumatique permet en fin de cycle de test ou de remplissage, de libérer l'accrochage de l'adaptateur sur le goulot.

## Revendications

1. Procédé de test ou de remplissage d'un récipient ou circuit de fluide avec un goulot (2), en particulier pour véhicule automobile, à l'aide d'un adaptateur (1) de test ou de remplissage, l'adaptateur (1) comprenant un porte-joint (17) supportant un joint d'étanchéité (19) destiné à être comprimé avec étanchéité sur le rebord (20) du goulot (2), et entourant un conduit (9) d'alimentation en fluide destiné à être engagé dans ledit goulot (2), de sorte à pouvoir raccorder avec étanchéité l'adaptateur (1) au goulot (2), ainsi qu'une pluralité de griffes de serrage (7) aptes à se solidariser sur le goulot (2), le procédé comprenant les étapes de :
- insertion du conduit (9) d'alimentation en fluide dans le goulot (2) ;
- mise en contact du joint d'étanchéité (19) du porte-joint (17) sur le rebord (20) du goulot (2) ;
- remontée axiale du porte-joint (17) par rapport à la pluralité de griffes (7) ;
- coulissement d'une bague extérieure (14) de l'adaptateur (1) et glissement du rebord inférieur (31) de la bague extérieure (14) sur la surface externe des griffes de serrage (7) ;
- solidarisation des griffes de serrage (7) sur le goulot (2) ;
- formation d'une liaison étanche entre le joint (19) et le goulot (2) par poussée axiale descendante du porte-joint (17) ;
- test ou remplissage d'un récipient ou circuit de fluide,
**caractérisé en ce que** l'étape de poussée axiale descendante du porte-joint (17) est réalisée par l'intermédiaire d'une étape de commande du coulissement d'au moins un piston (8, 10) prévu dans l'adaptateur (1).

2. Procédé selon la revendication 1, **caractérisé en ce qu'**il comprend une étape de commande, par l'intermédiaire d'un piston (16) prévu dans l'adaptateur (1), du coulissement axial de la bague extérieure (14).

3. Adaptateur de test ou.de remplissage (1) de récipient ou circuit de fluide avec un goulot (2), en particulier pour véhicule automobile, apte à établir un raccordement étanche avec ledit goulot (2), et comprenant :
- un corps (4) composé d'un manchon (5) formant poignée de préhension apte à être relié à une armoire de test par une gaine de liaison et des connexions électriques et pneumatiques ;
- un logement (6) relié audit corps (4) et formant tête de fixation étanche sur ledit goulot (2) ;
- une pluralité de griffes de serrage (7) disposées autour d'un axe longitudinal (X-X) du logement (6) ;
- des moyens aptes à exercer une pression sur la pluralité de griffes de serrage (7) pour les coupler ou désaccoupler du goulot (2) ;
- un porte griffes (12) sur lequel est fixée la pluralité des griffes de serrage (7) ;
- une liaison pivot, par laquelle la pluralité des griffes de serrage (7) est fixée sur le porte griffes (12), ce grâce à quoi les griffes de serrage (7) sont aptes à être couplées/désaccouplées du goulot (2) par pivotement ;
- une bague extérieure coulissante (14) apte à contraindre transversalement la pluralité de griffes de serrage (7) de manière à accoupler par serrage la pluralité de griffes (7) sur le filetage (3) du goulot (2),
**caractérisé en ce que** ledit adaptateur comprend de plus :
- un piston inférieur (8) apte à coulisser dans ledit logement (6) autour d'un conduit axial (9) d'alimentation de fluide ;
- un piston supérieur (10) apte à coulisser autour dudit conduit axial (9) et comprenant une tige (11) apte à venir en butée contre le piston inférieur (8) ;
- des premiers moyens ressort (15), prenant appui entre ladite bague extérieure (14) et ledit porte griffes (12) et à l'encontre desquels ladite bague extérieure (14) est axialement coulissante autour dudit porte griffes (12) ;
- un porte-joint (17) apte à coulisser autour dudit conduit axial (9) et présentant une face inférieure (18) portant un joint annulaire (19) apte à prendre appui contre le rebord (20) du goulot (2), la tige (11) du piston inférieur (8) étant apte à venir en butée contre le porte-joint (17) ;
- un poussoir (21) prévu coulissant sur le porte-joint (17) et présentant des moyens de poussée transversale aptes à exercer une poussée transversale sur la surface interne de la pluralité de griffes de serrage (7) de sorte à permettre l'écartement transversal par pivotement des griffes de serrage (7) du goulot (2) ainsi que la contraction des premiers moyens ressort (15) par remontée axiale de la bague extérieure (14) dont le rebord inférieur (31) est en appui sur la surface externe des griffes de serrage (7);
- des seconds moyens ressort (26) entre le porte griffes (12) et le poussoir (21) de manière à exercer une force de poussée axiale descendante sur le poussoir (21), de sorte que l'application d'une force de poussée axiale sur le porte-joint (17) entraîne la contraction des seconds moyens ressort (26), la disparition des forces de poussée transversale exercées par les moyens de poussée transversale du poussoir (21) du fait du rapprochement du poussoir (21) vers le porte griffes (12), la détente des premiers moyens ressort (15), le coulissement axial du rebord inférieur (31) de la bague extérieure (14) sur la surface externe des griffes de serrage (7) et le pivotement des griffes de serrage (7) vers leur position d'accouplage sur le goulot (2).

4. Adaptateur (1) selon la revendication 3, **caractérisé en ce que** le poussoir (21) comprend une partie tubulaire axiale (22) entourant une partie tubulaire axiale (23) du porte-joint (17) ainsi qu'une partie circulaire transversale (24) avec une extrémité libre (25) formant les moyens de poussée transversale contre la surface interne des griffes de serrage (7).

5. Adaptateur (1) selon la revendication 4, **caractérisé en ce que** l'extrémité libre (25) de la partie circulaire transversale (24) du poussoir (21) se présente sous la forme d'une bague cylindrique sur laquelle est en butée la surface interne des griffes de serrage (7).

6. Adaptateur (1) selon l'une quelconque des revendications 3 à 5, **caractérisé en ce que** chaque griffe de serrage (7) présente un filetage partiel de forme sensiblement complémentaire au filetage (3) du goulot (2).

7. Adaptateur (1) selon l'une quelconque des revendications 3 à 6, **caractérisé en ce qu'**un logement (29) pour le coulissement axial du piston inférieur (8) est formé dans le porte griffes (12).

8. Adaptateur (1) selon l'une quelconque des revendications 3 à 7, **caractérisé en ce que** chaque griffe de serrage (7) présente une rampe (30) sur sa surface externe pour le guidage du rebord inférieur (31) de la bague extérieure coulissante (14), de sorte à faciliter le coulissement sans frottement de la bague extérieure (14) sur la surface externe des griffes de serrage (7).

9. Adaptateur (1) selon l'une quelconque des revendications 3 à 8, **caractérisé en ce que** la bague extérieure coulissante (14) est reliée, par des moyens de fixation (14a), à un piston intermédiaire (16) coulissant autour dudit conduit axial (9) entre le piston supérieur (10) et le piston inférieur (8).

10. Adaptateur (1) selon la revendication 9, **caractérisé en ce que** les moyens de fixation (14a) de la bague extérieure (14) sur le piston intermédiaire (16) se présentent sous la forme d'au moins une vis (32) filetée dans au moins un taraudage correspondant prévu dans la tête du piston intermédiaire (16).

11. Adaptateur (1) selon l'une quelconque des revendications 9 et 10, **caractérisé en ce que** le piston intermédiaire (16) est apte à coulisser axialement sur la tige (11) du piston supérieur (10).

12. Adaptateur (1) selon l'une quelconque des revendications 9 à 11, **caractérisé en ce que** le piston intermédiaire (16) est apte à coulisser dans une bague fixe (33) sur laquelle est accroché le porte griffes (12).

13. Adaptateur (1) selon l'une quelconque des revendications 3 à 12, **caractérisé en ce que** la tige (11) du piston supérieur (10) est apte à exercer une force de poussée axiale sur la face supérieure du porte-joint (17) de sorte à permettre la formation d'une liaison étanche entre le joint (19) et le rebord (20) du goulot (2) par écrasement du joint (19) sur le rebord (20) du goulot (2).

## Claims

1. Method for testing or filling a fluid container or circuit with a neck (2), in particular for motor vehicle, using an adapter (1) for testing or filling, the adapter (1) comprising a seal holder (17) supporting a seal (19) intended to be compressed scalingly on the rim (20) of the neck (2), and surrounding a fluid feed conduit (9) intended to be enraged into said neck (2), in such a way as to be able to sealingly connect the adapter (1) to the neck (2), as well as a plurality of clamping claws (7) able to be attached on the neck (2), the method comprising the steps of:
- inserting the fluid feed conduit (9) into the neck (2);
- placing the seal (19) of the seal holder (17) into contact on the rim (20) of the neck (2);
- axial rising of the seal holder (17) in relation to the plurality of claws (7);
- sliding an exterior ring (14) of the adapter (1) and sliding of the lower rim (31) of the exterior ring (14) on the external surface of the clamping claws (7);
- attaching of the clamping claws (7) on the neck (2);
- forming of a sealed coupling between the seal (19) and the neck (2) by descending axial thrust of the seal holder (17);
- testing or filling of a fluid container or circuit,
**characterised in that** the step of descending axial thrust of the seal holder (17) is carried out by the intermediary of a step of controlling the sliding of at least one piston (8, 10) provided for in the adapter (1).

2. Method according to claim 1, **characterised in that** it comprises a steep of controlling, by the intermediary of a piston (16) provided in the adapter (1), of the axial sliding of the exterior ring (14).

3. Adapter for testing or filling (1) a fluid container or circuit with a neck (2), in particular for motor vehicle, able to establish a sealed connection with said neck (2), and comprising:
- a body (4) comprised of a sleeve (5) forming a grasping handle able to be connected to a test cabinet by a connecting sheath and electrical and pneumatic connections:
- a housing (6) connected to said body (4) and forming a sealed fixing head on said neck (2);
- a plurality of clamping claws (7) arranged around a longitudinal axis (X-X) of the hoeing (6);
- means able to exert a pressure on the plurality of clamping claws (7) in order to couple or uncouple them from the neck (2);
- a claw holder (12) whereon is fixed the plurality of clamping claws (7);
- a pivot link, via which the plurality of clamping claws (7) is fixed on the claw holder (12), this thanks to which the clamping claws (7) are able to he coupled/uncoupled with/from the neck (2) by pivoting;
- an exterior sliding ring (14) able to transversally force the plurality of clamping claws (7) in such a way as to couple via clamping the plurality of claws (7) on the threading (3) of the neck (2),
**characterised in that** said adapter comprises in addition:
- a lower piston (8) able to slide in said housing (6) around an axial conduit (9) of fluid feed:
- an upper piston (10) able to slide around said axial conduit (9) and comprising a rod (11) able to come up against the lower piston (8);
- first spring means (15), pressing against said exterior ring (14) and said claw holder (12) and against which said exterior ring (14) is axially sliding around said claw holder (12);
- a seal holder (17) able to slide around said axial conduit (9) and having a lower face (18) bearing a ring-shaped seal (19) able to press against the rim (20) of the neck (2), the rod (11) of the lower piston (8) being able to come up against the seal holder (17);
- a pusher (21) provided slidingly on the seal holder (17) and having means of transversal thrust able to exert a transversal thrust on the internal surface of the plurality of clamping claws (7) in such a way as to allow the transversal separation by pivoting of the clamping claws (7) of the neck (2) as well as the contraction of the first spring means (15) by axial rising of the exterior ring (14) of which the lower rim (31) is pressing against the external surface of the clamping claws (7);
- second spring means (26) between the claw holder (12) and the pusher (21) in such a way as to exert a descending axial thrust force on the pusher (21), in such a way that the application of an axial thrust force on the seal holder (17) results in the contraction of the second spring means (26), the disappearance of the transversal thrust forces exerted by the means of transversal thrust of the pusher (21) due to the coming together of the pusher (21) towards the claw holder (12), the expansion of the first spring means (15), the axial sliding of the lower rim (31) of the exterior ring (14) on the external surface of the clamping claws (7) and the pivoting of the clamping claws (7) towards their coupling position on the neck (2).

4. Adapter (1) according to claim 3, **characterised in that** the pusher (21) comprises an axial tubular portion (22) surrounding an axial tabular portion (23) of the seal holder (17) as well as a transversal circular portion (24) with a free end (25) forming the means of transversal thrust against the internal surface of the clamping claws (7).

5. Adapter (1) according to claim 4, **characterised in that** the free end (25) of the transversal circular portion (24) of the pusher (21) has the form of a cylindrical ring whereon is abutted the internal surface of the clamping claws (7).

6. Adapter (1) according to any of claims 3 to 5, **characterised in that** each clamping claw (7) has a partial threading of a form that is substantially complementary to the threading (3) of the neck (2).

7. Adapter (1) according to any of claims 3 to 6, **characterised in that** a housing (29) for the axial sliding of the lower piston (8) is formed in the claw holder (12).

8. Adapter (1) according to any of claims 3 to 7, **characterised in that** each clamping claw (7) has a ramp (30) on its external surface for the guiding of the lower rim (31) of the exterior sliding ring (14), in such a way as to facilitate the sliding without friction of the exterior ring (14) on the external surface of the clamping claws (7).

9. Adapter (I) according to any of claims 3 to 8, **characterised in that** the exterior sliding ring (14) is connected, by means of fastening (14a), to an intermediary piston (16) sliding around said axial conduit (9) between the upper piston (10) and the lower piston (8).

10. Adapter (1) according to claim 9, **characterised in that** the means of fastening (14a) of the exterior ring (14) on the intermediary piston (16) have the form or at least one screw (32) threaded in at least one corresponding tapping provided in the head of the intermediary piston (16).

11. Adapter (1) according to any of claims 9 and 10, **characterised in that** the intermediary piston (16) is able to slide axially on the rod (11) of the upper piston (10).

12. Adapter (1) according to any of claims to 11, **characterised in that** the intemiediary piston (16) is able to slide in a fixed ring (33) whereon is fastened the claw holder (12).

13. Adapter (1) according to any of claims 3 to 12, **characterised in that** the rod (11) of the upper piston (10) is able to exert an axial thrust force on the upper face of the seal holder (17) in such a way as to allow the forming of a sealed coupling between the seal (19) and the rim (20) of the neck (2) by crushing the seal (19) on the rim (20) of the neck (2).

## Patentansprüche

1. Verfahren zum Testen oder zum Füllen eines einen Stutzen (2) aufweisenden Flüssigkeitsbehälters oder Flüssigkeitskreislaufs, insbesondere für ein Kraftfahrzeug, mit Hilfe eines Test- oder Fülladapters (1), wobei der Adapter (1) eine Dichtungshalterung (17) aufweist, die einen Dichtungsring (19) stützt, welcher dazu bestimmt ist, mit Dichtheit auf den Rand (20) des Stutzens (2) gedrückt zu werden, und die eine Fluidzufuhrleitung (9) umschließt, welche dazu bestimmt ist, in den Stutzen (2) eingeführt zu werden, so dass sowohl der Adapter (1) mit dem Stutzen (2) dicht verbunden werden kann, als auch eine Vielzahl von Klemmklauen (7), die dazu in der Lage sind, mit dem Stutzen (2) in Eingriff zu gehen, wobei das Verfahren die folgenden Schritte aufweist:
- Einbringen der Fluidzufuhrleitung (9) in den Stutzen (2) ;
- In Kontakt bringen des Dichtungsrings (19) der Dichtungshalterung (17) mit dem Rand (20) des Stutzens (2);
- Axiales Hochziehen der Dichtungshalterung (17) bezüglich der Vielzahl von Klauen (7);
- Verschieben einer Außenhülse (14) des Adapters (1) und Gleiten des unteren Rands (31) der Außenhülse (14) auf der Außenfläche der Klemmklauen (7) ;
- In Eingriff bringen der Klemmklauen (7) mit dem Stutzen (2);
- Ausbilden einer dichten Verbindung zwischen dem Dichtungsring (19) und dem Stutzen (2) durch axiales Abwärts-Schieben der Dichtungshalterung (17);
- Testen oder Füllen eines Flüssigkeitsbehälters oder Flüssigkeitskreialaufs,
**dadurch gekennzeichnet, dass** der Schritt des axialen Abwärts-Schiebens der Dichtungshalterung (17) über einen Steuerschritt des Schiebens mindestens eines in dem Adapter (1) vorgesehenen Kolbens (8, 10) bewirkt wird.

2. Verfahren nach Anspruch 1" **dadurch gekennzeichnet, dass** das Verfahren einen Steuerschritt des axialen Schiebens der Außenhülse (14) über den in dem Adapter (1) vorgesehenen Kolben (16) aufweist.

3. Adapter (1) zum Testen oder Füllen eines einen Stutzen (2) aufweisenden Flüssigkeitsbehälters oder Flüssigkeitskreislaufs, insbesondere für ein Kraftfahrzeug, der dazu geeignet ist, eine dichte Verbindung mit dem Stutzen (2) herzustellen, und der Folgendes aufweist:
- einen Körper (4), der aus einer Muffe (5), die einen Griff ausbildet, welcher in der Lage ist, durch einen Verbindungsschlauch mit einem Prüfschrank verbunden zu werden, und aus elektrischen und pneumatischen Anschlüssen bestehe;
- ein Aufnahmebauteil (6), das mit dem Körper (4) verbunden ist und das Kopfstück für die dichte Befestigung an dem Stutzen (2) ausbildet;
- eine Vielzahl von Klemmklauen (7), die um eine Längsachse (X-X) des Aufnahmebauteils (6) herum angeordnet sind;
- Mittel, die geeignet sind, einen Druck auf die Vielzahl von Klemmklauen (7) auszuüben, um diese mit dem Stutzen (2) zusammenzukoppeln oder von diesem zu entkoppeln;
- eine Klauenhalterung (12), auf der die Vielzahl von Klemmklauen (7) angebracht ist;
- eine Schwenkverbindung, durch die die Vielzahl der Klemmklauen (7) an der Klauenhalterung (12) angebracht ist, und aufgrund derer die Klemmklauen (7) geeignet durch Schwenken mit dem Stutzen (2) zusammengekoppelt/ von diesem entkoppelt werden können;
- eine verschiebbare Außenhülse (14), die in der Lage ist, die Vielzahl von Klemmklauen (7) so in Seitenrichtung zu drängen, dass die Vielzahl von Klauen (7) auf dem Gewinde (3) des Stutzens (2) festgespannt wird,
**dadurch gekennzeichnet, dass** der Adapter des Weiteren Folgendes aufweist:
- einen unteren Kolben (8), der in der Lage ist, in dem Aufnahmebauteil (6) um eine axiale Fluidzufuhrleitung (9) herum zu gleiten;
- einen oberen Kolben (10), der in der Lage ist, um die axiale Leitung (9) herum zu gleiten und der eine Welle (11) aufweist, die in der Lage ist, mit dem unteren Kolben (8) in Anlage zu komme;
- erste Federmittel (15), die zwischen der Außenhülse (14) und der Klauenhalterung (12) gelagert sind und gegenüber denen die Außenhülse (14) um die Klauenhalterung (12) herum axial gleitend ist;
- eine Dichtungahalterung (17), die in der Lage ist, um die axiale Leitung (9) herum zu gleiten und eine untere Fläche (18) bereitzustellen, die einen ringförmigen Dichtungsring (79) trägt, der in der Lage ist, gegen die Kante (20) des Stutzens (2) gelagert zu sein, wobei die Welle (11) des unteren Kolbens (8) dazu in der Lage ist, mit der Dichtunshalterung (17) in Anlage zu komme;
- einen Mitnehmer (21), der auf der Dichtungshalterung (17) verschiebbar vorgesehen ist und Mittel zum seitlichen Schieben bereitstellt, die in der Lage sind, eine seitliche Schiebekraft auf die Innenfläche der Vielzahl von Klemmklauen (7) auf eine Art und Weise auszuüben, dass sowohl das seitliche Auslenken durch das Schwenken der Klemmklauen (7) über den Stutzen (2) als auch das Zusammendrücken der ersten Federmittels (15) durch die axiale Aufwärtsbewegung der Außenhülse (14) ermöglicht wird, deren untere Kante (31) auf der Außenfläche der Klemmklauen (7) lagert;
- zweite Federmittel (26), die zwischen der Klauenhalterung (12) und dem Mitnehmer (21) auf eine Art und Weise vorgesehen ist, dass eine axial abwärts wirkende Schiebekraft auf den Mitnehmer (21) derart ausgeübt wird, dass die Aufbringung einer axial wirkenden Schiebekraft auf die Dichtungshalterung (17) das Zusammendrücken der zweiten Federmittel (26), den Wegfall der Seitenkräfte, die aufgrund der Annäherung des Mitnehmers (26) an die Klauenhalterung (12) durch die Seitenschiebemittel des Mitnehmers (21) ausgeübt werden, das axiale Gleiten der unteren Kante (31) der Außenhülse (14) auf der Außenfläche der Klemmklauen (7) und das Schwenken der Klemmklauen (7) in Richtung ihrer Kopplungsstellung auf den Stutzen (2) verursacht.

4. Adapter (1) nach Anspruch 3, **dadurch gekennzeichnet, dass** der Mitnehmer (21) einen rohrförmigen axialen Abschnitt (22) aufweist, der einen rohrförmigen axialen Abschnitt (23) der Dichtungshalterung (17) sowie einen seitlichen Kreisabschnitt (24) mit einem freien Ende (25) umgibt, das die Mittel zum seitlichen Schieben gegen die Innenfläche der Klemmklauen (7) ausbildet.

5. Adapter (1) nach Anspruch 4, **dadurch gekennzeichnet, dass** das freie Ende (25) des seitlichen Kreisabschnitts (24) des Mitnehmers (21) in Form einer zylindrischen Hülse vorliegt, mit der die Innenfläche der Klemmklauen (7) in Anlage ist.

6. Adapter (1) nach einem der Ansprüche 3 bis 5, **dadurch gekennzeichnet, dass** jede Klemmklaue (7) ein Teilgewinde in einer im Wesentlichen dem Gewinde (3) des Stutzens (2) entsprechenden Form aufweist.

7. Adapter (1) nach einem der Ansprüche 3 bis 6, **dadurch gekennzeichnet, dass** ein Aufnahmebauteil (29) für das axiale Gleiten des unteren Kolbens (8) in der Klauenhalterung (12) ausgebindet ist.

8. Adapter (1) nach einem der Ansprüche 3 bis 7, **dadurch gekennzeichnet, dass** jede Klemmklaue (7) eine Schräg (30) an der Außenfläche für die Führung der unteren Kante (31) der gleitenden Außenhülse (14) auf eine Art und Weise bereitstellt, dass das Gleiten ohne Reibung der Außenhülse (14) auf der Außenfläche der Klemmklauen (7) erleichtert wird.

9. Adapter (1) nach einem der Ansprüche 3 bis 8, **dadurch gekennzeichnet, dass** die gleitende Außenhülse (14) durch Befestigungsmittel (14a) mit einem Zwischenkolben (16) verbunden ist, der um die axiale Leitung herum zwischen dem oberen Kolben (10) und dem unteren Kolben (8) gleitet.

10. Adapter (1) nach Anspruch 9, **dadurch gekennzeichnet, dass** die Befestigungsmittel (14a) der Außenhülse (14) auf dem Zwischenkolben (16) zumindest in Form einer Gewindeschraube (32) in zumindest einer korrespondierenden Gewindebohrung auftreten, die in dem Kopfende des Zwischenkolbens (16) vorgesehen ist.

11. Adapter (1) nach einem der Ansprüche 9 und 10, **dadurch gekennzeichnet, dass** der Zwischenkolben (16) geeignet ist, auf der Welle (11) des oberen Kolbens (10) zu gleiten.

12. Adapter (1) nach einem der Ansprüche 9 bis 11, **dadurch gekennzeichnet, dass** der Zwischenkolben (16) geeignet ist, in einer festen Hülse (33) zu gleiten, an der die Klauenhalterung (12) befestigt ist.

13. Adapter (1) nach einem der Ansprüche 3 bis 12, **dadurch gekennzeichnet, dass** die Welle (11) des oberen Kolbens (10) geeignet ist, eine axiale Schiebekraft auf die obere Fläche der nichtungshalterung (17) auf die Art und Weise auszuüben, dass ein Ausbilden einer dichten Verbindung zwischen der Dichtung (19) und der Kante (20) des Stutzens (2) durch Pressen der Dichtung (19) auf die Kante (20) des Stutzens (2) ermöglicht wird.
